# EUROPEAN PATENT SPECIFICATION

(11) **EP 1 475 559 B1**
(45) Date of publication and mention of the grant of the patent: **03.02.2010**
(21) Application number: 04010964.7
(22) Date of filing: 07.05.2004
(51) Int. Cl.: H02G 3/32, F16L 3/26, H02G 3/30

(54) **Support bracket for cable-carrier systems and accessory member therefor**
Stützkonsole für Kabelträgersysteme und Zubehör dafür
Console pour le support des systèmes chemins de cables et accessoire associé

(30) Priority: 09.05.2003 IT TO20030341
(43) Date of publication of application: 10.11.2004
(73) Proprietor: BTICINO S.P.A., 20154 Milano (IT)
(72) Inventor: Spagnoli, Gian Piero, 21051 Arcisate (Varese) (IT); Marengo, Massimo, 15011 Aqui Terme (Alessandria) (IT)
(74) Representative: Deambrogi, Edgardo

(56) References cited:
- NL-A- 8 102 668
- US-A- 6 082 690

## Description

The present invention relates to support systems for cable-carrier channels and trays in industrial ducting, and more specifically to a support bracket according to the preamble of claim 1 and a related accessory for supporting or holding an auxiliary pipe or tubing that can be coupled to the bracket.

The support brackets intended to be anchored to a load-bearing structure, for example to a wall, directly or by means of fixing profile sections, need to be light and at the same time must have a non-deformable structure, resistant to the load. In the mounted state, they must have an optimal load distribution in order to reduce the stresses at the anchorage base.

For these reasons, the bracket is obtained by shearing and bending a sheet of plate, and the surface intended to receive, supported on it, the cable-carrier channel, is normally extended by two wings or lateral walls bent at a right angle along the longitudinal edges.

The wings are triangular or trapezoidal in shape, so that their transverse length reduces from the base to the point of the bracket.

Frequently, when a cable-carrier system is installed on a wall, it would be convenient to be able to have the same supporting members available for also supporting a series of auxiliary pipes, for example water or gas piping, for which there is no space within the channel or tray intended to house the electric cables, or which may be added at a later time.

Up to now, this has not been possible except by placing the auxiliary pipes alongside the cable-carrier system, using a bracket of large dimensions, or by mounting a plurality of brackets in a superposed position along the same fixing profile section, each intended to support one type of ducting. In all these cases, the support system must of course be designed in the larger dimensions right from its first installation, to provide for the multiple purposes envisaged.

The aim of the present invention is to provide a satisfactory solution to the problem posed, by proposing a bracket configuration which is simple and of reduced overall dimensions, and capable of carrying different types of ducting, and a related accessory member, avoiding the drawbacks of the prior art.

To this end, the subject of the invention is a support bracket having the characteristics claimed in claim 1, and a retaining accessory member for supporting or holding an auxiliary pipe or tubing coupled to the bracket, having the characteristics claimed in claim 6.

In summary, the present invention is based on the principle of also utilising the lateral wings of the bracket as support members, varying the configuration thereof in such a way as to be able to produce one or more seats capable of housing - preferably beneath the support surface - respective members for coupling auxiliary pipes and tubing in a stable position and without particularly onerous installation work.

Further characteristics and advantages of the invention will be explained in more detail in the following detailed description, provided by way of non-limiting example, with reference to the appended drawings, in which:
Figure 1 is a plan view of a shaped sheet of plate, from which a bracket according to the invention can be obtained by bending;
Figure 2 is a side view of a bracket obtained from the sheet of plate in Figure 1;
Figure 3 is a perspective view of a bracket according to the invention in a service state, for coupling an accessory member of known type;
Figure 3a is a perspective view of the bracket of Figure 3 in a second embodiment;
Figures 4 and 5 are, respectively, a plan view of a shaped sheet of plate and a side view of a bracket obtained by bending the sheet of plate according to an alternative embodiment;
Figures 6 and 7 are, respectively, a plan view of a shaped sheet of plate and a side view of a bracket obtained by bending the sheet of plate according to a further alternative embodiment;
Figure 8 is a perspective view of the bracket of Figure 3a in an alternative embodiment for coupling a modified accessory member according to the invention; and
Figures 8a and 8b show in detail two embodiments of the modified accessory member.

In the figures, 10 indicates a support bracket according to the invention, comprising a support surface 12 and a pair of respective wings or lateral walls 14 connected to the longitudinal edges 16 of the support surface.

The bracket is shown comprising a plurality of apertures on the support surface. Also shown, solely by way of example, is a cable-carrier tray fixed to the bracket by means of a pair of coupling stirrups held by means of bolts disposed through the apertures provided on the support surface. Such embodiments are to be regarded as purely indicative, it being possible for an expert in the field to use the bracket for supporting any cable-carrier system and to adopt any other equivalent coupling system known in the art.

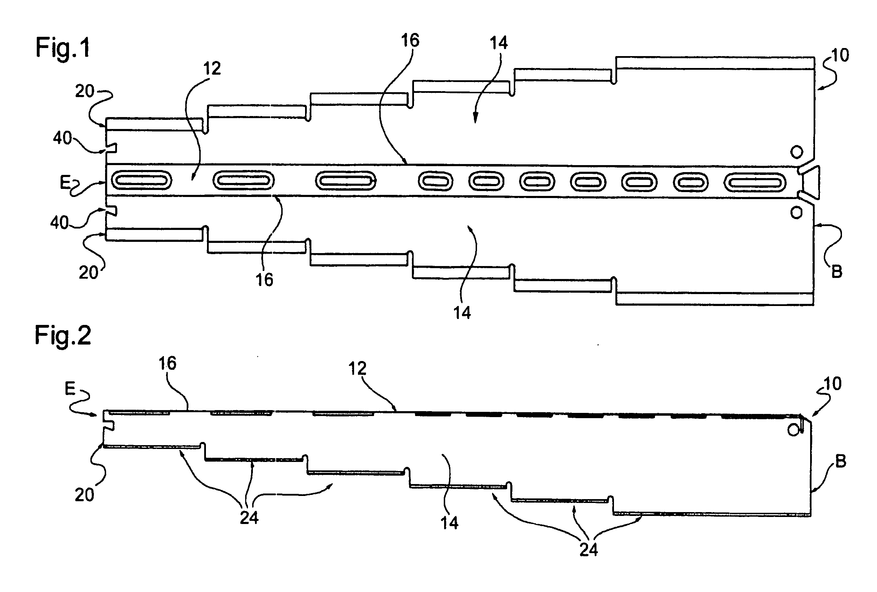

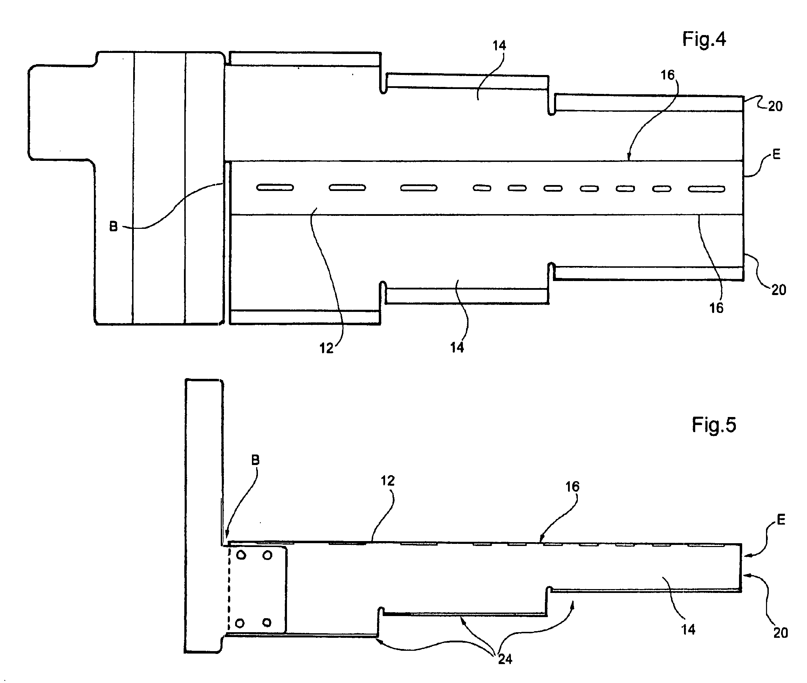

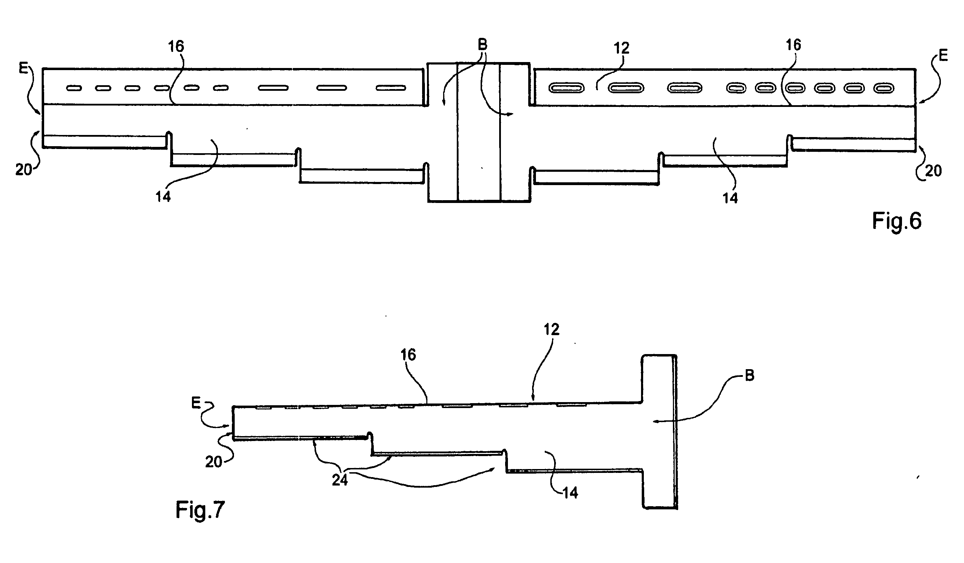

The bracket 10 is entirely obtainable by shearing and bending a sheet of plate illustrated in Figure 1 in the extended state. Further alternative embodiments are shown in Figures 4, 5 and 6, 7.

The free edges 20 of the wings 14 are cut in a stepped profile with sections parallel to the edge 16 for connection to the support surface, the profile being tapered from the base B towards the point E of the bracket.

Preferably, in each linear section of the profile, the edges 20 are further bent towards the inside of the bracket so as to constitute a pair of facing sliding guides 22 capable of receiving a respective auxiliary coupling member 30.

In the mounted state, the bracket 10 has a plurality of transverse sections 24, each comprising a pair of sliding guides 22 in a horizontal position, vertically offset.

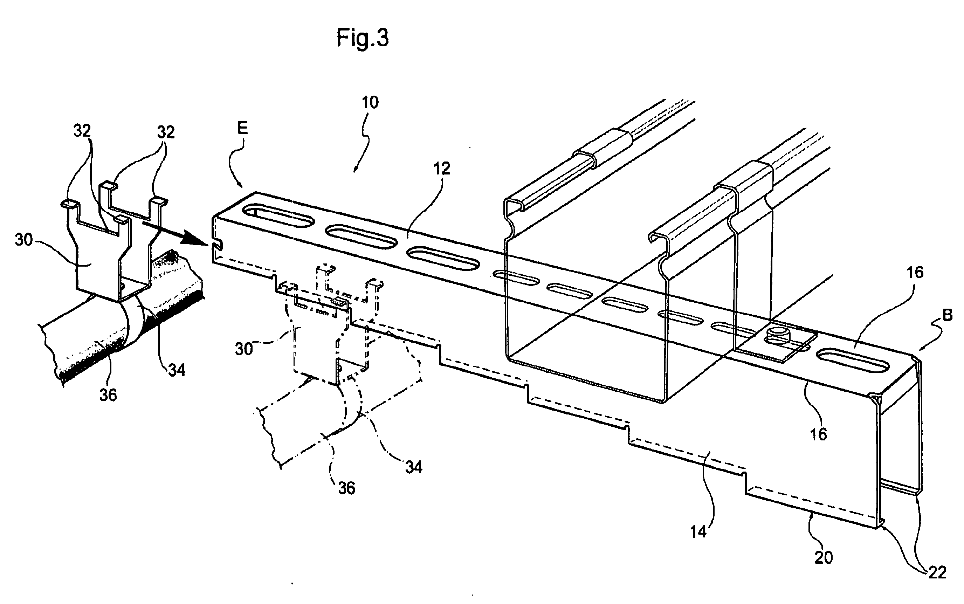

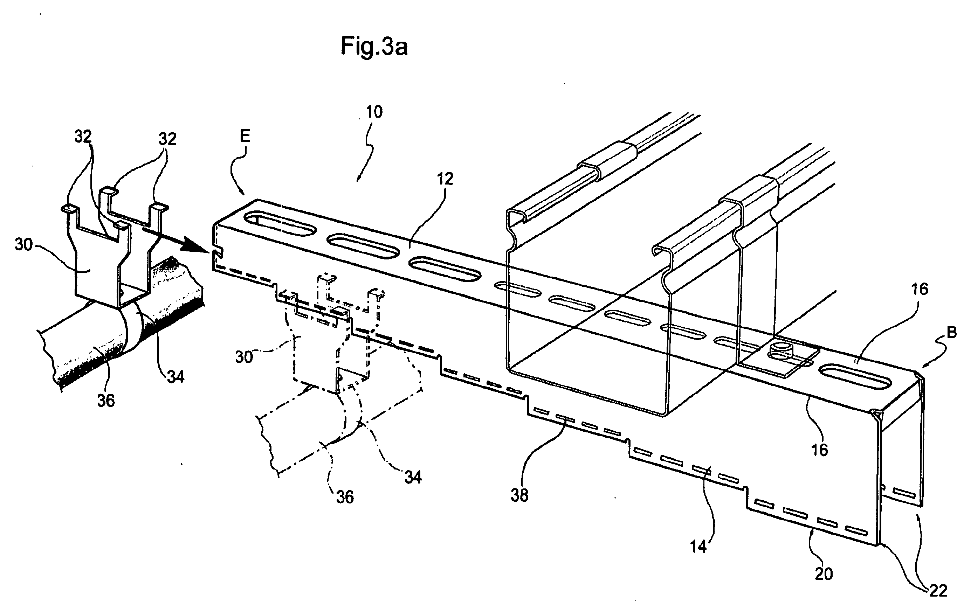

Figure 3 illustrates a coupling member 30 known per se, formed by a U-shaped stirrup, which has at its free edges respective pairs of folded back tabs 32 which are intended to engage in the seat formed by the guides 22 for housing the member in a stable position.

The coupling member has retaining means 34 for retaining an auxiliary pipe or tubing 36, produced according to criteria widely known in the art, which will not be described herein, since they are not relevant to the purpose of understanding of the invention.

As an alternative, or in addition to, the sliding guides 22, the wings of the bracket may be provided with a plurality of aligned apparatus-carrying holes 38, provided in proximity to the edge 20, having a shape and dimensions such as to receive, by coupling, the tabs 32 of the member 30, which member will be resiliently deformable in order to facilitate the introduction thereof (Figure 3a).

The bracket conveniently has, at the point E, on the end transverse edge of the wings 14, a pair of notches 40 provided at the same distance from the edges 16 and capable of forming a seat for the temporary coupling of a member of the cable-carrier system, for example the cover of a channel, in the event of work being carried out on the system by an operator.

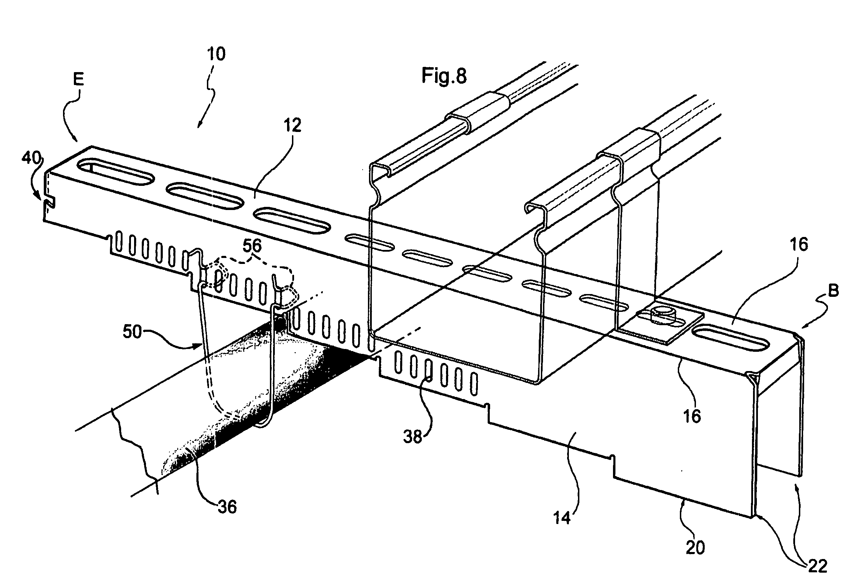

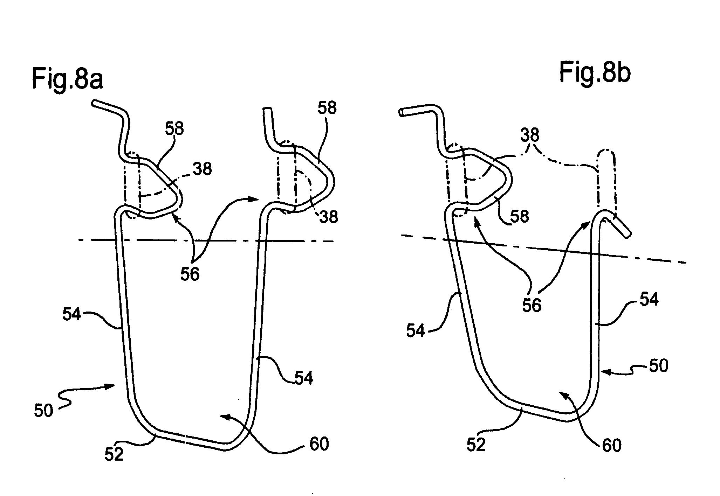

In an alternative embodiment shown in Figure 8, the apparatus-carrying holes 38 are elongate in shape and are oriented vertically in such a way as to be able to allow the coupling of a modified retaining accessory member, of the type illustrated in Figures 8a and 8b and indicated by 50.

The retaining accessory member according to the invention is formed by a length of common cylindrical steel wire of circular section, preferably having a diameter of between 1 and 2 mm, obtained by drawing and bent in a generally U-shaped conformation, such as to form a stirrup or U-bolt including a base section 52 and two prongs or branches 54 extending transversely with respect to the base section. The prongs 54 have shaped coupling ends 56 capable of being inserted into a corresponding pair of apparatus-carrying holes 38. At least one of said ends is shaped in the form of a resiliently deformable brace 58 and is capable of snap engagement in a corresponding coupling hole. At the root of the brace 58, the wire is bent so as to form with the sections of the transverse branches 54 an acute angle for coupling on the contour of the hole.

The member 50 is capable of receiving, in the region 60 comprised between the prongs 54, an auxiliary pipe or tubing 36, and at least partially surrounding it. By means of a modest resilient deformation acquired at the moment of coupling in the corresponding apparatus-carrying holes of the bracket, and of the connection at an acute angle to the root of the brace, the member 50 arrives at a stable coupling configuration. It may be used in the suspended configuration (as shown in the figures) for supporting a pipe passing beneath the bracket, or in an upturned configuration (not illustrated) for holding against the support surface of the bracket a pipe disposed beside the cable-carrier channel or tray.

Advantageously, the bracket according to the invention - owing to the stepped configuration of the profile 20 -makes it possible to house in a stable position, beneath or above the support surface and at the sections 24, a plurality of such coupling members 30, increasing the surface area of the bracket that can be used for supporting ducting members without increasing the dimensions of the bracket itself.

It should be noted that the embodiment proposed for the present invention in the preceding explanation is of a purely exemplary and non-limiting character. A technical expert in the field may easily implement the present invention in different embodiments which do not however depart from the principles disclosed herein, and are therefore comprised within the scope of protection defined by the appended claims.

## Claims

1. A support bracket (10) for cable-carrier channels or trays, comprising a support surface (12) for supporting the channel and a pair of lateral walls (14) connected to the longitudinal edges (16) of said surface (12) and having a transverse length variable in the longitudinal direction, **characterised in that** the profile of said walls (14) opposed to the longitudinal connection edges (16) has a generally stepped conformation, with sections parallel to the connection edges (16), the transverse length of the walls (14) decreasing from the anchorage base (B) of the bracket towards its free end (E), so that the aforesaid bracket is capable of receiving, at each section, an accessory member for supporting or retaining auxiliary pipes or tubing.

2. A bracket according to claim 1, **characterised in that** said profile of the lateral walls (14) has an edge (20) bent back towards the inside of the bracket (10) so as to constitute a pair of facing sliding guides (22) capable of receiving and supporting a plurality of said accessory members (30).

3. A bracket according to claim 1 or 2, **characterised in that** said lateral walls (14) are provided with a plurality of aligned coupling holes (38) arranged at each section of the stepped profile, and capable of receiving, by coupling, a plurality of said accessory members (30).

4. A bracket according to claim 1, 2 or 3, **characterised in that** it is made in one piece by shearing and bending a sheet of plate.

5. A bracket according to any one of the preceding claims, **characterised in that** the lateral walls (14) have, on the transverse edge at the free end (E), respective coupling notches (40) for the suspension of members of the cable-carrier channel or tray.

6. A retaining accessory member (50) for supporting or holding an auxiliary pipe or tubing (36) associated with a support bracket (10) which comprises a support surface (12) and a pair of lateral walls (14), the profile of which has a generally stepped conformation, and which are provided with a plurality of coupling holes (38) at each section of the stepped profile,
**characterised in that** it is formed by a length of wire, bent in a generally U-shaped conformation and including a base section (52) and two transverse branches (54), capable of receiving and at least partially surrounding in the region (60) comprised between said branches (54) an auxiliary pipe or tubing (36), and having a pair of shaped coupling ends (56) capable of being inserted into a corresponding pair of holes (38) provided on the lateral walls (14) of the bracket (10) in order to arrive at a stable coupling configuration.

7. A retaining member (50) according to claim 6, wherein at least one of said ends (56) is shaped in the form of a resiliently deformable brace (58), the wire being bent at the root of the brace in such a way as to form an acute angle with the sections of the transverse branches (54), and is capable of snap engagement in a corresponding coupling hole (38).

## Patentansprüche

1. Befestigungsarm (10) für Kabelkanäle oder Kabelrinnen, wobei der Befestigungsarm eine Auflagefläche (12), um den Kanal zu tragen, sowie ein Paar von Seitenwänden (14) enthält, die mit den Längskanten (16) der Fläche (12) verbunden sind und in Querrichtung eine Länge besitzen, die in Längsrichtung variabel ist, **dadurch gekennzeichnet, dass** das Profil der Wände (14) gegenüber den in Längsrichtung verlaufenden Verbindungskanten (16) im Allgemeinen stufenförmig mit Bereichen ausgebildet ist, die parallel zu den Verbindungskanten (16) verlaufen, wobei die Querlängen der Wände (14) von der Verankerungsbasis (B) des Befestigungsarms zu dessen freiem Ende (E) kleiner werden, so dass dieser Befestigungsarm in jedem Bereich ein Zusatzelement aufnehmen kann, um Nebenrohrleitungen oder Schläuche zu halten oder einzuspannen.

2. Befestigungsarm gemäß Anspruch 1, **dadurch gekennzeichnet, dass** das Profil der Seitenwände (14) eine Kante (20) besitzt, die zurück zum Inneren des Befestigungsarms (10) gebogen wird, um ein Paar von einander gegenüberliegenden Gleitführungen (22) zu bilden, die eine Vielzahl der Zusatzelemente (30) aufnehmen und halten können.

3. Befestigungsarm gemäß Anspruch 1 oder 2, **dadurch gekennzeichnet, dass** die Seitenwände (14) mit einer Vielzahl von ausgerichteten Kupplungsöffnungen (38) versehen sind, die in jedem Bereich des stufenförmigen Profils angeordnet sind und durch Kuppeln eine Vielzahl der Zusatzelemente (30) aufnehmen können.

4. Befestigungsarm gemäß Anspruch 1, 2 oder 3, **dadurch gekennzeichnet, dass** der Befestigungsarm aus einem Stück durch Schneiden und Biegen eines Stücks Blech hergestellt wird.

5. Befestigungsarm gemäß irgendeinem der bisherigen Ansprüche, **dadurch gekennzeichnet, dass** die Seitenwände (14) auf der Querkante am freien Ende (E) mit entsprechenden Kupplungskerben (40) versehen sind, um Elemente des Kabelkanals oder der Kabelrinne aufhängen zu können.

6. Einspann-Zusatzelement (50) zum Tragen oder Halten einer Nebenrohrleitung oder eines Schlauchs (36), wobei das Element einem Befestigungsarm (10) zugeordnet ist, der eine Aufnahmefläche (12) sowie ein Paar von Seitenwänden (14) besitzt, deren Profil im Allgemeinen stufenförmig ausgebildet ist und die in jedem Bereich des stufenförmigen Profils mit einer Vielzahl von Kupplungsöffnungen (38) versehen sind,
**dadurch gekennzeichnet, dass** das Einspann-Zusatzelement von einem Stück Draht gebildet wird, der im Allgemeinen U-förmig gebogen ist und einen Basisteil (52) sowie zwei Querzweige (54) aufweist, wobei das Einspann-Zusatzelement im Bereich (60), der sich zwischen den Zweigen (54) befindet, eine Nebenrohrleitung oder einen Schlauch (36) aufnehmen und zumindest teilweise umschließen kann, wobei das Einspann-Zusatzelement ein Paar von geformten Kupplungsenden (56) besitzt, die in ein entsprechendes Paar von Öffnungen (38) eingesetzt werden können, die in den Seitenwänden (14) des Befestigungsarms (10) vorgesehen sind, um einen stabilen Kupplungsaufbau zu erreichen.

7. Einspannelement (50) gemäß Anspruch 6, wobei zumindest eines der Enden (56) in Form einer elastisch verformbaren Klammer (58) ausgebildet ist, wobei der Draht an der Wurzel der Klammer so gebogen wird, dass er mit den Teilen der Querzweige (54) einen spitzen Winkel bildet und in eine entsprechende Kupplungsöffnung (38) einschnappend eingreifen kann.

## Revendications

1. Console de support (10) pour des canaux ou plateaux de support de câble, comprenant une surface de support (12) pour supporter le canal et une paire de parois latérales (14) connectées aux bords longitudinaux (16) de ladite surface (12) et ayant une longueur transversale variable dans la direction longitudinale, **caractérisée en ce que** le profil desdites parois (14) à l'opposé des bords de connexion longitudinaux (16) a une conformation globalement étagée, avec des sections parallèles aux bords de connexion (16), la longueur transversale des parois (14) diminuant depuis la base d'ancrage (B) de la console jusqu'à son extrémité libre (E), de telle manière que le console susmentionné peut recevoir, au niveau de chaque section, un élément accessoire pour supporter ou retenir des tuyaux ou une tuyauterie auxiliaires.

2. Console selon la revendication 1, **caractérisée en ce que** ledit profil des parois latérales (14) a un bord (20) courbé vers l'arrière vers l'intérieur de la console (10) de façon à constituer une paire de guides de coulissement opposées (22) pouvant recevoir et supporter une pluralité desdits éléments accessoires (30).

3. Console selon la revendication 1 ou 2, **caractérisée en ce que** lesdites parois latérales (14) sont pourvues d'une pluralité de trous de couplage alignées (38) agencés au niveau de chaque section du profil étagé, et pouvant recevoir, par couplage, une pluralité desdits éléments accessoire (30).

4. Console selon la revendication 1, 2 ou 3, **caractérisée en ce qu'**elle est faite d'un seul bloc par cisaillement et pliage d'une plaque de tôle.

5. Console selon l'une quelconque des revendications précédentes, **caractérisée en ce que** les parois latérales (14) ont, sur un bord transversal au niveau de l'extrémité libre (E), des fentes de couplage (40) respectives pour la suspension d'éléments de canal ou de plateau de support de câble.

6. Elément accessoire de retenue (50) pour supporter ou maintenir un tuyau ou une tuyauterie auxiliaire (36) associé à un console de support (10) qui comprend une surface de support (12) et une paire de parois latérales (14), dont le profil a une conformation globalement étagée, et qui sont pourvues d'une pluralité de trous de couplage (38) au niveau de chaque section du profil étagé,
**caractérisé en ce qu'**il est formé par un tronçon de fil métallique, courbé globalement en forme de U et incluant une section de base (52) et deux branches transversales (54), pouvant recevoir et entourant au moins partiellement dans la région (60) comprise entre lesdites branches (54) un tuyau ou une tuyauterie auxiliaire (36), et ayant une paire d'extrémité de couplage formées (56) pouvant être insérées dans une paire correspondante de trous (38) placés sur les parois latérales (14) de la console (10) afin d'arriver à une configuration de couplage stable.

7. Elément de retenue (50) selon la revendication 6, dans lequel au moins l'une desdites extrémités (56) est formée sous la forme d'une excroissance élastiquement déformable (58), le fil métallique étant plié à la base de l'excroissance de façon à former un angle aigu avec les sections des branches transversales (54), et peut venir en prise par emboîtement dans un trou de couplage (38) correspondant.
